# EUROPÄISCHE PATENTANMELDUNG

(11) **EP 1 507 150 A1**
(43) Veröffentlichungstag der Anmeldung: **16.02.2005**
(21) Anmeldenummer: 04018080.4
(22) Anmeldetag: 30.07.2004
(51) Int. Cl.: G01S 13/87, G01S 15/87, G01S 13/93, G01S 15/93

(54) **Vorrichtung und Verfahren zur Abstandsbestimmung von Objekten**

(30) Priorität: 09.08.2003 DE 10336682
(71) Anmelder: AUDI AG, 85045 Ingolstadt (DE)
(72) Erfinder: Riedel, Helmut, Dr., 86697 Oberhausen (DE)
(74) Vertreter: Thielmann, Frank

(57) **Zusammenfassung**

Bei einer Vorrichtung und einem Verfahren zur Abstandsbestimmung von Objekten 1 im Umfeld eines Kraftfahrzeuges 2, mit einer Anzahl N von Sendeeinrichtungen 3, 3', 3" sowie einer zugeordneten Empfangseinrichtung 4, wird vorgeschlagen, dass eine Steuereinrichtung 5 vorgesehen ist, welche die Anzahl N von Sendeeinrichtungen 3, 3', 3" alternierend betreibt, so dass die von den verschiedenen Sendeeinrichtungen 3, 3', 3" emittierten Signale S_{E}, S_{E}', S_{E}" und an einem der Objekte 1 reflektierten Signale S_{R}, S_{R}', S_{R}" in Abhängigkeit von dem alternierenden Betrieb eindeutig durch die Empfangseinrichtung 4 identifizierbar sind. Vorschlagsgemäß kann das Umfeld des Kraftfahrzeuges 2 vollständig ausgeleuchtet werden und kann der Abstand D eines im Fahrzeugumfeld befindlichen Objektes 1 genau bestimmt werden.

## Beschreibung

Die vorliegende Erfindung betrifft eine Vorrichtung sowie ein Verfahren zur Abstandsbestimmung von Objekten mit einer Anzahl von Sendeeinrichtungen sowie einer zugeordneten Empfangseinrichtung.

Gattungsgemäße Vorrichtungen und Verfahren zur Abstandsbestimmung arbeiten zumeist nach dem Laufzeitprinzip, wobei das von der Sendeeinrichtung emittierte Signal an einem Objekt reflektiert wird und das reflektierte Signal von der zur Sendeeinrichtung unmittelbar benachbarten Empfangseinrichtung detektiert wird. Anhand der Geschwindigkeit und der Laufzeit des Signals wird daraufhin die Entfernung des Objektes ermittelt.

Darüber hinaus beschreibt die Druckschrift DE 40 04 530 C2 ein Verfahren und eine Vorrichtung zur optischen Reflexlichterfassung zur Erfassung eines Objektes, wobei die Empfängersignale zweier sich in einem Messraum überschneidender, zueinander versetzt gebündelt gerichteter Lichtsender-Reflexlichtempfänger-Strahlengänge getrennt gemessen und relativ zueinander ausgewertet werden. Dazu werden die beiden Lichtsender von einem niederfrequenten Oszillator periodisch wechselweise angesteuert, so dass der benachbarte Reflexlichtempfänger von dort, wo die beiden sich einander überlagernden Strahlengänge mit gleicher Intensität auf das Objekt auftreffen gleichmäßiges bzw. unmoduliertes Licht empfängt und von dort, wo mehr Licht des einen Lichtsenders oder des anderen Lichtsenders auf das Objekt auftrifft, ungleichmäßiges bzw. entsprechend moduliertes Licht empfängt. Basierend auf der Modulation des Lichtes ist die Position des Objektes bestimmbar.

Vor diesem Hintergrund ist es Aufgabe der vorliegenden Erfindung eine verbesserte Vorrichtung sowie ein verbessertes Verfahren zur Abstandsbestimmung von Objekten zu konzipieren, welche die Verwendung von mehreren Sendeeinrichtungen und einer Empfangseinrichtung an beliebigen verschiedenen Positionen zulassen, um insbesondere bei der Anwendung in Kraftfahrzeugen ein möglichst großes Umfeld zu überwachen und den Abstand zu in diesem Umfeld befindlichen Objekten möglichst genau zu bestimmen.

Vorrichtungsgemäß wird die Aufgabe gelöst, indem eine Steuereinrichtung vorgesehen ist, welche die Anzahl von Sendeeinrichtungen alternierend betreibt, so dass die von den verschiedenen Sendeeinrichtungen emittierten Signale und an einem der Objekte reflektierten Signale in Abhängigkeit von dem alternierenden Betrieb eindeutig durch die Empfangseinrichtung identifizierbar sind. Auf diese Weise können pro Vorrichtung mehrere Sendeeinrichtungen und eine Empfangseinrichtung verwendet werden, ohne dass dabei durch Überlagerungen und Triangulationseffekte der ausgesandten Signale Messfehler auftreten.

Vorteilhaft sind die Sendeeinrichtungen und die Empfangseinrichtung räumlich getrennt voneinander angeordnet. Durch dieses Merkmal bilden die Sendeeinrichtungen und die Empfangseinrichtung keine große Baueinheit, sondern mehrere kleine Baueinheiten, so dass diese wesentlich einfacher an günstigen Stellen in einem Kraftfahrzeug untergebracht werden können. Beispielsweise können die Sendeeinrichtungen dabei im Bereich der Frontscheinwerfer positioniert sein, während die Empfangseinrichtung im Bereich des Innenspiegels positioniert ist.

Bevorzugt weisen die Sendeeinrichtungen unterschiedliche Sendeleistungen bzw. Öffnungswinkel auf. Auf diese Weise können die Sendeeinrichtungen auf verschiedene Entfernungsbereiche sowie Raumwinkelbereiche des Fahrzeugumfeldes ausgelegt werden, welche während der Fahrt und/oder während des Einparkens für die Abstandsbestimmung von Objekten besonders relevant sind.

Zweckmäßig sind die Sendeeinrichtungen so positioniert, das sich Sendeeinrichtungen mit einer großen Sendeleistung unterhalb von Sendereinrichtungen mit einer geringen Sendeleistung befinden. Auf diese Weise wird insbesondere bei der Verwendung in einem Kraftfahrzeug berücksichtigt, dass sich die Sendeeinrichtungen mit großer Sendeleistung nicht in Augenhöhe befinden und für andere Verkehrsteilnehmer keine Gesundheitsgefährdung darstellen.

Besonders zweckmäßig sind die Sendeeinrichtungen so positioniert, dass sich ihre Öffnungswinkel zumindest teilweise überlappen, damit das Umfeld des Kraftfahrzeuges vollständig überwacht ist und keine toten Raumwinkel auftreten.

Verfahrensgemäß wird die Aufgabe gelöst, indem bei einer Anzahl von Sendeeinrichtungen sowie einer zugeordneten Empfangseinheit, die Anzahl von Sendeeinrichtungen durch eine Steuereinrichtung alternierend betrieben werden, so dass die von den verschiedenen Sendeeinrichtungen emittierten Signale und an einem der Objekte reflektierten Signale in Abhängigkeit von dem alternierenden Betrieb eindeutig durch die Empfangseinrichtung identifiziert werden. Auf diese Weise ist es möglich mehrere Sendeeinrichtungen zu verwenden, die am Kraftfahrzeug günstig positionierbar sind und das Fahrzeugumfeld vollständig erfassen, ohne dass sich die emittierten Signale überlagern und ohne dass die Zuordnung der reflektierten Signale zu den einzelnen Sendeeinrichtungen erschwert wird.

Gemäß einer ersten Weiterbildung der Erfindung sieht der alternierende Betrieb der Sendeeinrichtungen vor, dass die Sendeeinrichtungen jeweils mit gleicher Zeitdauer nacheinander betrieben werden. Dies vereinfacht die Zuordnung und Auswertung der reflektierten Signale.

Gemäß einer zweiten Weiterbildung sieht der alternierende Betrieb der Sendeeinrichtungen vor, dass die Sendeeinrichtungen in Abhängigkeit von ihrer Sendeleistung betrieben werden. Vorteilhaft werden die Sendeeinrichtungen mit geringen Reichweiten dabei häufiger betrieben als die Sendeeinrichtungen mit großen Reichweiten.

Und gemäß einer anderen Weiterbildung sieht der alternierende Betrieb vor, dass die Sendeeinrichtungen in Abhängigkeit von ihrem Öffnungswinkel betrieben werden. Demnach werden zum Beispiel die Sendeeinrichtungen, welche den mittleren Raumwinkelbereich vor dem Kraftfahrzeug beaufschlagen häufiger betrieben, als jene Sendeeinrichtungen, welche die seitlichen Raumwinkelbereiche vor dem Kraftfahrzeug beaufschlagen.

Außerdem kann der alternierende Betrieb der Sendeeinrichtungen vorsehen, dass die Sendeeinrichtungen jeweils in Abhängigkeit von der Position eines Objektes im Umfeld eines Kraftfahrzeuges betrieben werden. So werden beispielsweise vor dem Erfassen eines Objektes im Fahrzeugumfeld die Sendeeinrichtungen mit großer Reichweite aktiviert und werden nach dem Erfassen eines Objektes im Fahrzeugumfeld automatisch die Sendeeinrichtungen mit geringer Reichweite aktiviert.

Und schließlich kann der alternierende Betrieb der Sendeeinrichtungen vorsehen, dass die Sendeeinrichtungen in Abhängigkeit von der Geschwindigkeit des Kraftfahrzeuges betrieben werden. So werden bei hohen Geschwindigkeiten des Kraftfahrzeuges automatisch die Sendeeinrichtungen mit großer Reichweite aktiviert, während bei niedrigen Geschwindigkeiten die Sendeeinrichtungen mit geringer Reichweite aktiviert werden.

Grundsätzlich sind die verschiedenen Methoden des alternierenden Betriebes der verschiedenen Sendeeinrichtungen auch miteinander kombinierbar, wodurch das Verfahren zur Abstandsbestimmung von Objekten im Umfeld eines Kraftfahrzeuges äußerst flexibel ist und die damit erzielten Ergebnisse zugleich sehr genau sind.

Die vorliegende Erfindung wird anhand der beiden nachfolgenden Zeichnungsfiguren näher erläutert. Es zeigen:
- Fig. 1: Eine erfindungsgemäße Vorrichtung in schematischer Darstellung; und
- Fig. 2: ein Kraftfahrzeug mit der darin integrierten Vorrichtung in vereinfachter Darstellung.

Die Vorrichtung zur Abstandsbestimmung von Objekten 1 arbeitet nach dem Laufzeitverfahren. Dazu umfasst die in einem Kraftfahrzeug 2 untergebrachte Vorrichtung im vorliegenden Beispiel drei räumlich getrennte Sendeeinrichtungen 3, 3', 3" und eine für die Sendeeinrichtungen 3, 3', 3" gemeinsame Empfangseinrichtung 4. Die Sendeeinrichtungen 3, 3', 3" senden ihre Signale S_{E}, S_{E}' oder S_{E}" einer bekannten Signalgeschwindigkeit nacheinander in das Umfeld des Kraftfahrzeuges 2 aus. Gemäß einer einfachen Ausführung der Erfindung wiederholt sich die zeitliche Abfolge der emittierten Signale S_{E}, S_{E}', S_{E}" dabei in stets der gleichen Weise. Die Signale S_{E}, S_{E}', S_{E}" werden an einem Objekt 1 im Fahrzeugumfeld, wie zum Beispiel an einem anderen vorausfahrenden Kraftfahrzeug oder an einem stehenden Hindernis reflektiert und die reflektierten Signale S_{R}, S_{R}' bzw. S_{R}" werden von der Empfangseinrichtung 4 empfangen. Die Laufzeit der emittierten und reflektierten Signale S_{E}, S_{E}', S_{E}", S_{R}, S_{R}' S_{R}" ist zu dem Abstand D zwischen dem Objekt 1 und dem Kraftfahrzeug 2 proportional. Indem die Sendeeinrichtungen 3, 3', 3" alternierend betrieben werden, so dass jeweils nur eine der Sendeeinrichtungen ein Signal S_{E}, S_{E}' oder S_{E}" ausgibt, können sich die Signale S_{E}, S_{E}', S_{E}", S_{R}, S_{R}', S_{R}" der Sendeeinrichtungen 3, 3', 3" nicht gegenseitig überlagern und können die von der Empfangseinrichtung 4 empfangenen Signale S_{R}, S_{R}' bzw. S_{R}" in eindeutiger Weise der betreffenden Sendeinrichtung 3, 3' oder 3" zugeordnet werden und wird eine fehlerfreie Abstandsbestimmung erreicht.

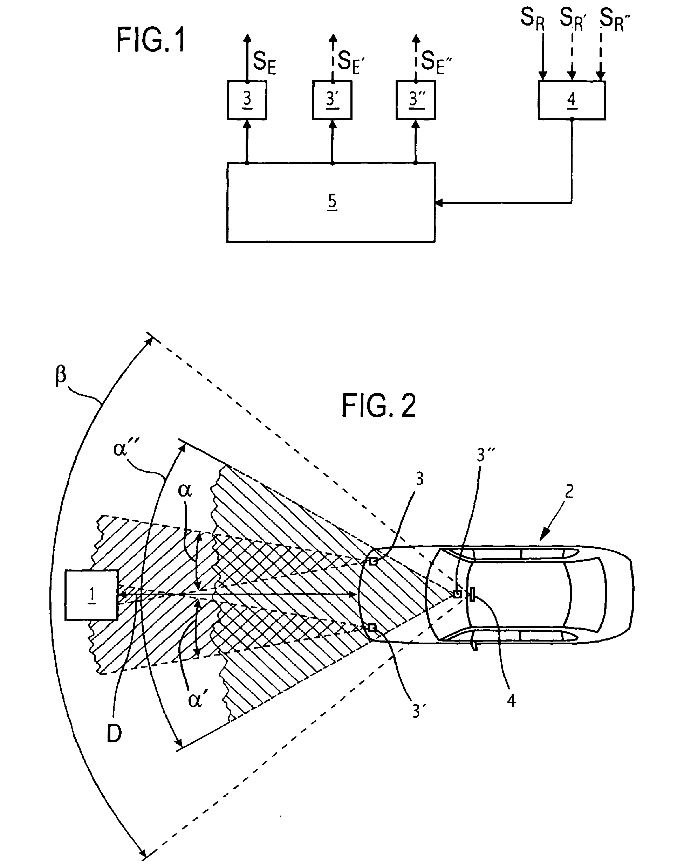

In den Fig. 1 und 2 sind jeweils insgesamt drei Sendeeinrichtungen 3, 3', 3" vorgesehen, wobei zwei der Sendeeinrichtungen 3, 3' im unteren Bereich der Scheinwerfer des Kraftfahrzeuges 2 angeordnet sind und die dritte Sendeeinrichtung 3" im oberen Bereich des Innenspiegels des Kraftfahrzeuges 2 angeordnet ist. Ebenfalls im Bereich des Innenspiegels und unmittelbar benachbart zu der dritten Sendeeinrichtung 3" ist die gemeinsame Empfangseinrichtung 4 angeordnet.

Im dargestellten Ausführungsbeispiel weisen die beiden unteren Sendeeinrichtungen 3, 3' jeweils eine große Sendeleistung und einen verhältnismäßig geringen Öffnungswinkel α, α' von ca. 20 Grad auf, um den Fernbereich vor dem Kraftfahrzeug 2 in einem schmalen Raumwinkel auszuleuchten, während die obere Sendeeinrichtung 3" eine geringere Sendeleistung und einen großen Öffnungswinkel α" von ca. 60 Grad aufweist, um den Nahbereich vor dem Kraftfahrzeug 2 in einem weiten Raumwinkel auszuleuchten. Wie in Fig. 2 gut erkennbar ist, überlappen sich die Öffnungswinkel α, α', α" der verschiedenen Sendeeinrichtungen 3, 3', 3", so dass das interessierende Umfeld vor dem Kraftfahrzeug 2 vollständig ausgeleuchtet wird.

Zum optimalen Empfangen der an dem Objekt 1 reflektierten Signale S_{R}, S_{R}', S_{R}" besitzt die in dem Kraftfahrzeug 2 erhöht positionierte Empfangseinrichtung 4 einen großen Öffnungswinkel β von ca. 80 Grad, der durch die unmittelbar benachbarte dritte Sendeeinrichtung 3" nur unwesentlich eingeschränkt ist.

Die Sendeeinrichtungen 3, 3', 3" und die Empfangseinrichtung 4 sind über eine Steuereinrichtung 5 miteinander verbunden. Diese Steuereinrichtung 5 regelt den alternierenden Betrieb der Sendeeinrichtungen 3, 3', 3" und wertet die von der Empfangseinrichtung 4 empfangenen Signale S_{R}, S_{R}', S_{R}" aus, sofern die Auswertung der empfangenen Signale S_{R}, S_{R}', S_{R}" nicht direkt in der Empfangseinrichtung 4 erfolgt.

Für den alternierenden Betrieb der Sendeeinrichtungen 3, 3', 3" ist vorgesehen, dass die Steuereinrichtung 5 die einzelnen Sendeeinrichtungen 3, 3', 3" mit gleicher Zeitdauer nacheinander, in Abhängigkeit von ihrer Sendeleistung, in Abhängigkeit von ihrem Öffnungswinkel, in Abhängigkeit von der Position des Objektes 1 im Umfeld des Kraftfahrzeuges 2 und/oder in Abhängigkeit von der Geschwindigkeit des Kraftfahrzeuges 2 ansteuert, wobei jedenfalls immer nur eine der drei Sendeeinrichtungen 3, 3', 3" arbeitet und keine Überlagerungen der emittierten bzw. reflektierten Signale S_{E}, S_{E}', S_{E}", S_{R}, S_{R}', S_{R}" auftreten.

Bei der Auswertung der von der Empfangseinrichtung 4 empfangenen Signale S_{R}, S_{R}', S_{R}" durch das Steuergerät 5 wird berücksichtigt, welche der verschiedenen Sendeeinrichtungen 3, 3', 3" das zugehörige Signal S_{E}, S_{E}', S_{E}" ausgesandt hat, so dass trotz der unterschiedlichen Positionen der Sendeeinrichtungen 3, 3', 3" am bzw. im Kraftfahrzeug 2 stets korrekte Ergebnisse erzielt werden.

Erfolgt die Auswertung der von der Empfangseinrichtung 4 empfangenen Signale S_{R}, S_{R}' bzw. S_{R}" direkt in der Empfangseinrichtung 4, so wird hierbei natürlich ebenfalls die im Steuergerät 5 verfügbare Information herangezogen, welche der drei Sendeeinrichtungen 3, 3' oder 3" gerade aktiv ist.

### Bezugszeichenliste:

- 1: Objekt
- 2: Kraftfahrzeug
- 3, 3', 3'': Sendeeinrichtung
- 4: Empfangseinrichtung
- 5: Steuereinrichtung

- D: Abstand zwischen 1 und 2
- N: Anzahl von 3, 3', 3"
- S_{E}, S_{E}', S_{E}": emittiertes Signal
- S_{R}, S_{R}', S_{R}": reflektiertes Signal
- α, α', α": Öffnungswinkel von 3, 3', 3"
- β: Öffnungswinkel von 4

## Patentansprüche

1. Vorrichtung zur Abstandsbestimmung von Objekten, mit
- einer Anzahl von Sendeeinrichtungen sowie
- einer zugeordneten Empfangseinrichtung,
**dadurch gekennzeichnet, dass**
eine Steuereinrichtung (5) vorgesehen ist, welche die Anzahl (N) von Sendeeinrichtungen (3, 3', 3") alternierend betreibt, so dass die von den verschiedenen Sendeeinrichtungen (3, 3', 3") emittierten Signale (S_{E}, S_{E}', S_{E}") und an einem der Objekte (1) reflektierten Signale (S_{R}, S_{R}', S_{R}") in Abhängigkeit von dem alternierenden Betrieb eindeutig durch die Empfangseinrichtung (4) identifizierbar sind.

2. Vorrichtung nach Anspruch 1, **dadurch gekennzeichnet, dass** die Sendeeinrichtungen (3, 3', 3") und die Empfangseinrichtung (4) räumlich getrennt voneinander angeordnet sind.

3. Vorrichtung nach Anspruch 1 oder 2, **dadurch gekennzeichnet, dass** die Sendeeinrichtungen (3, 3', 3") unterschiedliche Sendeleistungen bzw. Öffnungswinkel (α, α', α") aufweisen.

4. Vorrichtung nach einem der Ansprüche 1 bis 3, **dadurch gekennzeichnet, dass** die Sendeeinrichtungen (3, 3', 3") so positioniert sind, dass sich die Sendeeinrichtungen (3, 3') mit einer großen Sendeleistung unterhalb der Sendeeinrichtungen (3") mit einer geringen Sendeleistung befinden.

5. Vorrichtung nach einem der Ansprüche 1 bis 4, **dadurch gekennzeichnet, dass** die Anzahl (N) von Sendeeinrichtungen (3, 3', 3"), so positioniert sind, dass sich ihre Öffnungswinkel (α, α', α") zumindest teilweise überlappen.

6. Verfahren zur Abstandsbestimmung von Objekten mittels einer Anzahl von Sendeeinrichtungen sowie einer zugeordneten Empfangseinheit,
**dadurch gekennzeichnet, dass**
die Anzahl (N) von Sendeeinrichtungen (3, 3', 3") durch eine Steuereinrichtung (5) alternierend betrieben werden, so dass die von den verschiedenen Sendeeinrichtungen (3, 3', 3") emittierten Signale (S_{E}, S_{E}', S_{E}") und an einem der Objekte (1) reflektierten Signale (S_{R}, S_{R}', S_{R}") in Abhängigkeit von dem alternierenden Betrieb eindeutig durch die Empfangseinheit (4) identifiziert werden.

7. Verfahren nach Anspruch 6, **dadurch gekennzeichnet, dass** der alternierende Betrieb der Sendeeinrichtungen (3, 3', 3") vorsieht, dass die Sendeeinrichtungen (3, 3', 3") jeweils mit gleicher Zeitdauer nacheinander betrieben werden.

8. Verfahren nach Anspruch 6 oder 7, **dadurch gekennzeichnet, dass** der alternierende Betrieb der Sendeeinrichtungen (3, 3', 3") vorsieht, dass die Sendeeinrichtungen (3, 3', 3") jeweils in Abhängigkeit von ihrer Sendeleistung betrieben werden.

9. Verfahren nach einem der Ansprüche 6 bis 8, **dadurch gekennzeichnet, dass** der alternierende Betrieb der Sendeeinrichtungen (3, 3', 3") vorsieht, dass die Sendeeinrichtungen (3, 3', 3") jeweils in Abhängigkeit von ihrem Öffnungswinkel (α, α', α") betrieben werden.

10. Verfahren nach einem der Ansprüche 6 bis 9, **dadurch gekennzeichnet, dass** der alternierende Betrieb der Sendeeinrichtung (3, 3', 3") vorsieht, dass die Sendeeinrichtungen (3, 3', 3") jeweils in Abhängigkeit von der Position der Objekte (1) im Umfeld eines Kraftfahrzeuges (2) betrieben werden.

11. Verfahren nach einem der Ansprüche 6 bis 10, **dadurch gekennzeichnet, dass** der alternierende Betrieb der Sendeeinrichtungen (3, 3', 3") vorsieht, dass die Sendeeinrichtungen (3, 3', 3") jeweils in Abhängigkeit von der Geschwindigkeit eines Kraftfahrzeuges (2) betrieben werden.
